# EUROPÄISCHE PATENTANMELDUNG

(11) **EP 4 654 108 A1**
(43) Veröffentlichungstag der Anmeldung: **26.11.2025**
(21) Anmeldenummer: 24177464.5
(22) Anmeldetag: 22.05.2024
(51) Int. Cl.: G06Q 20/20, G06Q 30/0601, B62B 3/14, B62B 5/00, G07G 1/00, G01G 19/414, B65D 1/38

(54) **EINKAUFSKORB MIT EINEM ERFASSUNGSGERÄT ZUM ERFASSEN EINES ARTIKELCODES**

(71) Anmelder: Expresso Deutschland GmbH & Co. KG, 34123 Kassel (DE)
(72) Erfinder: Bünz, Alexander, 22175 Hamburg (DE); Wilhelms, Claudius, 34125 Kassel (DE); Hildmann, André, 34121 Kassel (DE); Kamzin, Eduard, 34246 Vellmar (DE)
(74) Vertreter: REHBERG HÜPPE + PARTNER

(57) **Zusammenfassung**

Die Erfindung betrifft einen Einkaufskorb (1) mit einer Einkaufsartikelaufnahmeeinrichtung (2) und einem Handgriff (3), wobei der Handgriff (3) oberhalb einer Öffnungsebene (4) einer von einem Öffnungsrand (5) umgebenen Öffnung der Einkaufsartikelaufnahmeeinrichtung (2) angeordnet ist, wobei dem Öffnungsrand (5) der Einkaufsartikelaufnahmeeinrichtung (2) und/oder dem Handgriff (3) ein Erfassungsgerät (6) zum Erfassen eines Artikelcodes (7) eines in die Einkaufsartikelaufnahmeeinrichtung eingebrachten oder einzubringenden Artikels (8) zugeordnet ist, wobei das Erfassungsgerät (6) eine Einrichtung zum Bereitstellen und/oder Senden und/oder Speichern des Artikelcodes aufweist. Um sicherzustellen, dass ausschließlich in den Einkaufskorb (1) gelegte Artikel (8) erfasst werden, wird vorgeschlagen, dass das Erfassungsgerät (6) nicht ohne Werkzeug lösbar mit dem Öffnungsrand (5) der Einkaufsartikelaufnahmeeinrichtung (2) und/oder dem Handgriff (3) verbunden ist, wobei in dem an dem Handgriff (3) getragenen Zustand des Einkaufskorbs (1) ein Erfassungsbereich (10) des Erfassungsgeräts (6) relativ zu der Öffnung der Einkaufsartikelaufnahmeeinrichtung (2) konstant so bemessen und ausgerichtet ist, dass dieser die Öffnung und einen zwischen dem Handgriff (3) und der Öffnung aufgespannten Volumenbereich (11) erfasst.

## Beschreibung

### TECHNISCHES GEBIET DER ERFINDUNG

Die Erfindung betrifft einen Einkaufskorb mit einer Einkaufsartikelaufnahmeeinrichtung und einem Handgriff. Der Handgriff ist oberhalb einer Öffnungsebene einer von einem Öffnungsrand umgebenen Öffnung der Einkaufsartikelaufnahmeeinrichtung angeordnet. Dem Öffnungsrand der Einkaufsartikelaufnahmeeinrichtung und/oder dem Handgriff ist ein Erfassungsgerät zum Erfassen eines Artikelcodes eines in die Einkaufsartikelaufnahmeeinrichtung eingebrachten oder einzubringenden Artikels zugeordnet. Das Erfassungsgerät weist eine Einrichtung auf, welche zum Bereitstellen und/oder Senden und/oder zum Speichern des Artikelcodes ausgebildet ist.

Einkaufskörbe der vorgenannten Art sind tragbare Einkaufskörbe, die eine korbartige Einkaufsartikelaufnahmeeinrichtung mit einer oberseitigen Öffnung und einem zumeist im Bereich des Öffnungsrandes schwenkbar mit der Einkaufsartikelaufnahmeeinrichtung verbundenen Handgriff aufweist.

### STAND DER TECHNIK

Aus der Patentschrift US 9 230 249 B1 ist ein tragbarer Einkaufskorb mit einer in die Einkaufsartikelaufnahmeeinrichtung legbaren Einlage bekannt. Die Einlage kann alternativ so ausgestaltet sein, dass diese um den Handgriff des Einkaufskorbs gelegt werden kann.

Die Einlage weist einen Scanner zum Erfassen von Artikelcodes auf. Darüber hinaus kann die Einlage eine Wägeeinrichtung, ein Display und zusätzliche Elektronik aufweisen, um einen Bezahlprozess für die in die Einkaufsartikelaufnahmeeinrichtung eingelegten Produkte abzuwickeln.

Nachteilig bei derartigen Einkaufskörben ist, dass der Scanner aufgrund der Integration in die relativ zu der Einkaufsartikelaufnahmeeinrichtung bewegliche Einlage gegebenenfalls relativ zu dem Einkaufskorb verrutscht oder delokalisiert wird und infolge dessen Artikel in der Verkaufsumgebung erfasst, welche nicht in den Einkaufskorb gelegt wurden. Dies führt zu einer falschen Abrechnung für den Kunden.

### AUFGABE DER ERFINDUNG

Der Erfindung liegt daher die Aufgabe zugrunde, sicherzustellen, dass ausschließlich in den Einkaufskorb gelegte Artikel erfasst werden.

### LÖSUNG

Die Aufgabe der Erfindung wird mit den Merkmalen des Hauptanspruchs gelöst. Weitere erfindungsgemäße Ausgestaltungen sind den abhängigen Patentansprüchen zu entnehmen.

### BESCHREIBUNG DER ERFINDUNG

Die Erfindung betrifft einen Einkaufskorb mit einer Einkaufsartikelaufnahmeeinrichtung und einem Handgriff, welcher oberhalb einer Öffnungsebene einer von einem Öffnungsrand umgebenen Öffnung der Einkaufsartikelaufnahmeeinrichtung angeordnet ist. Dem Öffnungsrand der Einkaufsartikelaufnahmeeinrichtung und/oder dem Handgriff ist ein Erfassungsgerät zum Erfassen eines Artikelcodes eines in die Einkaufsartikelaufnahmeeinrichtung eingebrachten oder einzubringenden Artikels zugeordnet. Das Erfassungsgerät weist eine Einrichtung auf, welche eingerichtet ist, einen Artikelcode bereitzustellen und/oder zu senden und/oder zu speichern.

Erfindungsgemäß ist das Erfassungsgerät nicht ohne Werkzeug lösbar mit dem Öffnungsrand der Einkaufsartikelaufnahmeeinrichtung und/oder dem Handgriff verbunden. In dem an dem Handgriff getragenen Zustand des Einkaufskorbs ist ein Erfassungsbereich des Erfassungsgeräts relativ zu der Öffnung der Einkaufsartikelaufnahmeeinrichtung konstant so bemessen und ausgerichtet, dass der Erfassungsbereich die Öffnung und einen zwischen dem Handgriff und der Öffnung aufgespannten Volumenbereich erfasst.

In vorteilhafter Art und Weise ist das Erfassungsgerät nun fest mit dem Einkaufskorb verbunden, nämlich in oder an dessen Handgriff, in oder an dem Öffnungsrand der Einkaufsartikelaufnahmeeinrichtung oder in oder an einem mit dem Öffnungsrand fest verbundenen Steg, welcher sich über die Öffnung der Einkaufsartikelaufnahmeeinrichtung erhebt. Fest verbunden bedeutet, dass ein Nutzer des Einkaufskorbs das Erfassungsgerät nicht ohne Werkzeug oder nicht ohne Zerstörung von dem Einkaufskorb entfernen oder die Orientierung dessen Erfassungsbereichs ändern kann. Die Verbindung zwischen dem Erfassungsgerät und dem Einkaufskorb ist somit derart, dass zusätzliche Hilfsmittel oder über ein übliches Benutzungsmaß hinausgehende Kraftanstrengungen notwendig sind, um das Erfassungsgerät von dem Einkaufskorb zu lösen oder die Orientierung des Erfassungsbereichs des Erfassungsgeräts zu ändern. Unter einer festen Verbindung wird beispielsweise eine Rastverbindung verstanden, welche nur unter Zuhilfenahme eines Werkzeugs gelöst werden kann. Des Weiteren kann eine feste Verbindung eine Klebeverbindung oder ähnliches sein.

Es besteht jedenfalls eine definierte feste Position des Erfassungsgeräts und dessen Erfassungsbereichs relativ zu dem Handgriff beziehungsweise der Einkaufsartikelaufnahmeeinrichtung. Bezogen auf einen relativ zu der Öffnung der Einkaufsartikelaufnahmeeinrichtung schwenkbaren Handgriff bedeutet dies, dass der Erfassungsbereich des Erfassungsgeräts insbesondere bezogen auf eine aufgestellte Position des Handgriffs stets identisch ausgerichtet ist. Die aufgestellte Position des Handgriffs an einem tragbaren Einkaufskorb ist insbesondere diejenige, in welcher eine vertikale Projektionsebene des Handgriffs quer zu der Öffnungsebene der Einkaufsartikelaufnahmeeinrichtung orientiert ist. Quer kann insbesondere bedeuten, dass die Projektionsebene ungefähr einen 90°-Winkel zu der Öffnungsebene aufweist. Ein solcher Winkel stellt sich zwischen dem Handgriff und der Einkaufsartikelaufnahmeeinrichtung bei unbeladenen Einkaufskörben üblicherweise ein, da der Handgriff in dem Benutzungszustand, d.h. dem aufgestellten Zustand, über dem Schwerpunkt der Einkaufsartikelaufnahmeeinrichtung positioniert ist. Bei als Trolley ausgebildeten Einkaufskörben, welche im Benutzungszustand üblicherweise gegenüber einem Untergrund verkippt sind, ist der Handgriff zumindest dann oberhalb der Öffnungsebene der Einkaufsartikelaufnahmeeinrichtung angeordnet, wenn die Öffnungsebene im Wesentlichen parallel zu dem Untergrund ausgerichtet ist.

Das Erfassungsgerät kann beispielsweise in einen Körper des Handgriffs beziehungsweise einen Körper der Einkaufsartikelaufnahmeeinrichtung integriert sein und nur mit seinem Erfassungsbereich durch eine Eingangs-/Ausgangsöffnung aus dem Gehäuse hervortreten. In jedem Fall ist das Erfassungsgerät derart ortsfest und bezogen auf seinen Erfassungsbereich orientierungstreu an dem Einkaufskorb angeordnet, dass dieses nicht ohne Werkzeug oder gar Zerstörung des Erfassungsgeräts und/oder des Einkaufskorbs gelöst und/oder dejustiert werden kann.

Der Erfassungsbereich des Erfassungsgeräts ist durch die ortsfeste Anbringung des Erfassungsgeräts an dem Einkaufskorb derart relativ zu der Öffnungsebene definiert, nämlich bemessen und ausgerichtet, dass bevorzugt die gesamte Fläche (oder zumindest 80 Prozent oder zumindest 90 Prozent) der Öffnung der Einkaufsartikelaufnahmeeinrichtung von dem Erfassungsbereich des Erfassungsgeräts erfasst ist. Andererseits ist der Erfassungsbereich nicht wesentlich größer als ein Volumenbereich, welcher zwischen dem Handgriff und der Öffnung der Einkaufsartikelaufnahmeeinrichtung aufgespannt ist, um zu verhindern, dass Artikel, welche nicht in die Einkaufsartikelaufnahmeeinrichtung gelegt wurden, sondern beispielsweise in Regalen der Verkaufsumgebung oder auf Aufstellern angeordnet sind, fälschlicherweise erfasst werden. Der zwischen dem Handgriff und der Öffnung aufgespannte Volumenbereich weist bevorzugt die Form einer Pyramide oder eines Kegels auf. Insbesondere kann die Grundfläche des Volumenbereichs durch die Öffnung der Einkaufsartikelaufnahmeeinrichtung gebildet sein. Insbesondere weist der Volumenbereich bezogen auf einen Querschnitt (quer zu einer Längserstreckung des Handgriffs) und/oder einen Längsschnitt (parallel zu der Längserstreckung des Handgriffs) einen im Wesentlichen dreieckigen Volumenbereich auf. Der dreieckige Querschnitt des Volumenbereichs weist zwei Schenkel auf, welche sich jeweils von einem Randbereich des Öffnungsrands zu dem Handgriff erstrecken und einen Schenkel, welcher die bezogen auf die Öffnung gegenüberliegenden Randbereiche des Öffnungsrands verbindet. Allerdings ist es nicht zwingend erforderlich, dass der Erfassungsbereich ausschließlich in diesem Volumenbereich liegt. Vielmehr kann der Erfassungsbereich auch geringfügig über den durch den aufgestellten Handgriff und die Öffnungsebene definierten Volumenbereich hinausgehen. Beispielsweise ist es möglich, dass der Erfassungsbereich bezogen auf die Öffnungsebene des Öffnungsrands der Einkaufsartikelaufnahmeeinrichtung noch rund um den Öffnungsrand mit einem radialen Maß hinausgeht, welches 5 %, 10 %, 20 %, 25 %, 50 %, 75 % oder 100 % einer Breite beziehungsweise eines Durchmessers der Öffnung der Einkaufsartikelaufnahmeeinrichtung entspricht. Auch Zwischenwerte der vorgenannten Prozentangaben sind möglich. Darüber hinaus kann in besonders großzügig gestalteten Verkaufsumgebungen ein noch größerer Erfassungsbereich vorgesehen sein. Bei üblichen Dimensionen von gebräuchlichen Einkaufskörben kann der Erfassungsbereich beispielsweise bis zu 10 cm oder 20 cm über die Außenkontur der Einkaufsartikelaufnahmeeinrichtung hinausgehen. Dadurch wird in den meisten Anwendungsfällen sichergestellt, dass der Nutzer nicht ungewollt Artikel in der Verkaufsumgebung erfasst.

Neben den ausschließlich tragbaren Einkaufskörben, wobei insbesondere solche mit einem Leergewicht von unter 25 kg, unter 20 kg, unter 15 kg, unter 10 kg oder noch leichtere Einkaufskörbe gemeint sind, sind Einkaufskörbe der hier behandelten Art auch sackkarrenartig oder Trolley-artig ausgebildete Einkaufskörbe, insbesondere mit Leergewichten der vorgenannten Größenordnung, welche über zwei oder mehr in einem Bodenbereich angeordnete Rollen oder Gleitelemente verfügen, mit welchen der Nutzer den Einkaufskorb durch eine Verkaufsumgebung schieben oder hinter sich herziehen kann. Derartige Einkaufskörbe können zur Fortbewegung relativ zu dem Untergrund verkippt werden, sodass sich an der Unterseite des Einkaufskorbs befindliche Standfüße von dem Untergrund lösen und der Einkaufskorb lediglich über Rollen oder Gleitelemente Kontakt zu dem Untergrund hat. In dieser Fortbewegungsstellung ist der Einkaufskorb geneigt. Der Handgriff kann längenverstellbar, insbesondere teleskopierbar, ausgebildet sein, wobei zusätzlich zu dem Handgriff ein separater Zusatzgriff vorgesehen sein kann.

Während eines Einkaufs trägt ein Nutzer den Einkaufskorb an dem Handgriff oder schiebt diesen auf einem Untergrund durch eine Verkaufsumgebung und scannt Artikelcodes der von ihm ausgewählten Artikel mittels des an dem Einkaufskorb befestigten Erfassungsgeräts ein, bevor er diese in die Einkaufsartikelaufnahmeeinrichtung legt. Die erfassten Artikelcodes werden in einem lokalen Speicher des Erfassungsgeräts oder einer mit dem Erfassungsgerät in Kommunikationsverbindung stehenden Speichereinrichtung gespeichert. Falls der Nutzer einen Artikel wieder aus der Einkaufsartikelaufnahmeeinrichtung entfernt, kann das Erfassungsgerät gemäß einer möglichen Ausführungsform die Bewegungsrichtung des Artikels detektieren und den zugehörigen Artikelcode wieder aus der in der Speichereinrichtung gespeicherten Datenmenge entfernen.

Wenn der Kunde schließlich seinen Einkauf beendet und einen Bezahlvorgang durchführen möchte, kann er mit dem Einkaufskorb an eine Selbstbedienungskasse oder eine von einem Mitarbeiter bediente Kasse der Verkaufsumgebung gehen und dort die in der Speichereinrichtung gespeicherten Artikelcodes, beispielsweise in Listenform, an das Kassensystem übermitteln. Das Übertragen der bereits gespeicherten Artikelcodes an die Kasse erübrigt das ansonsten lästige und gegebenenfalls zeitaufwändige Auflegen und Wiedereinpacken der zuvor in den Einkaufskorb gelegten Artikel. Das Kassensystem ordnet den Artikelcodes anhand einer Datenbank definierte Artikel und Artikelpreise zu und errechnet einen Gesamtpreis für den Einkauf des Kunden.

Das Erfassungsgerät des Einkaufskorbs kann beispielsweise ein Scanner oder eine Kamera sein. Das Erfassungsgerät kann über eine entsprechende Software zum Erfassen von Artikelcodes verfügen oder mit einer separaten Recheneinrichtung verbunden sein, welche über eine derartige Software verfügt. Ergänzend weist das Erfassungsgerät eine Kommunikationsverbindung zu einer Einrichtung auf, die zum Empfangen und/oder Senden und/oder Speichern von Artikelcodes geeignet ist. Diese Einrichtung kann dem Erfassungsgerät selbst zugehörig sein oder als eine davon separate Einrichtung ausgebildet sein. Die Einrichtung zum Empfangen und/oder Senden von Artikelcodes kann insbesondere eine Kommunikationsschnittstelle aufweisen, welche übliche Protokolle zur Datenkommunikation verwendet, beispielsweise Bluetooth oder ZigBee. Darüber hinaus kann dem Erfassungsgerät ein Datenspeicher zugeordnet sein oder das Erfassungsgerät kann selbst einen internen Datenspeicher aufweisen, um die erfassten Artikelcodes zwischenspeichern zu können, bevor diese dann von einer Einrichtung zum Empfangen und/oder Senden an eine zu dem Erfassungsgerät externe Recheneinrichtung, beispielsweise ein Kassensystem, übermittelt werden.

Die Einrichtung zum Empfangen und/oder Senden und/oder Speichern des Artikelcodes kann gemäß einer Ausführungsform Teil eines externen Endgeräts, wie beispielsweise eines Mobilgeräts des Nutzers, sein. Das Erfassungsgerät weist dann eine Kommunikationsschnittstelle, beispielsweise eine Bluetoothschnittstelle, auf, um mit einer entsprechenden Kommunikationsschnittstelle des externen Endgeräts zu kommunizieren und die erfassten Artikelcodes entweder unmittelbar oder nach Zwischenspeicherung (in einem lokalen Speicher des Erfassungsgeräts und/oder des Einkaufskorbs) an einen Datenspeicher des externen Endgeräts zu übermitteln. Die Artikelcodes sind dann in dem Datenspeicher des externen Endgeräts, beispielsweise einem Mobiltelefon, gespeichert und können von einem Kassensystem zum Erstellen einer Rechnung verwendet werden. Der Bezahlprozess erfolgt dann so, dass der Nutzer die Artikel nicht nochmals aus dem Einkaufskorb entnehmen muss, sondern diese darin belassen kann und nur die gesammelten Artikelcodes, beispielsweise in Listenform, an das Kassensystem übermittelt. Das Kassensystem ordnet den Artikelcodes entsprechende Artikel beziehungsweise Preise zu und erstellt die Gesamtrechnung für den Kunden. Der Kunde kann den Gesamtpreis dann entweder bar oder besonders bevorzugt bargeldlos entrichten.

Ein derartig ausgebildeter Einkaufskorb kann in unterschiedlichen Arten von Geschäften, beispielsweise Supermärkten, Baumärkten, Gartencentern und ähnlichen eingesetzt werden. Der Einkaufskorb ermöglicht einem Nutzer ein selbstständiges Erfassen der von ihm gewählten Artikel.

Jeder Artikel weist bevorzugt einen optischen Artikelcode auf, beispielsweise einen Barcode oder QR-Code. Alternativ sind ebenso elektromagnetische Codes, beispielsweise in Form von RFID-Tags, oder andere denkbar, sofern ein dazu korrespondierendes Erfassungsgerät des Einkaufskorbs existiert. Der Artikelcode kann dann von dem Erfassungsgerät gescannt oder über andere Identifizierungstechniken eingelesen werden, wenn der Kunde diesen in den Einkaufskorb legt. Das Erfassen erfolgt durch das Erfassungsgerät, welches fest und insbesondere mit konstantem Erfassungsbereich die Öffnung der Einkaufsartikelaufnahmeeinrichtung überwacht.

Die Einkaufsartikelaufnahmeeinrichtung des Einkaufskorbs kann eine Wägeeinrichtung zum Wiegen des in die Einkaufsartikelaufnahmeeinrichtung eingebrachten Artikels aufweisen. Mittels der Wägeeinrichtung des Einkaufskorbs kann ein von dem Nutzer in die Einkaufsartikelaufnahmeeinrichtung gelegter Artikel gewogen werden. Das ermittelte Gewicht des eingelegten Artikels kann dann durch eine Recheneinrichtung des Einkaufskorbs oder auch eine Recheneinrichtung eines mit dem Einkaufskorb verbundenen externen Endgeräts mit den zu dem jeweiligen Artikelcode gespeicherten Gewichtsdaten verglichen werden. Dadurch kann ausgeschlossen werden, dass der Nutzer nicht den in den Einkaufskorb gelegten Artikel mittels des Erfassungsgeräts erfasst, sondern vielmehr einen anderen Artikel. Auch kann ein Fehler ausgeschlossen werden, der beispielsweise durch eine falsche Etikettierung eines Artikels entstanden ist. Die Wägeeinrichtung ermöglicht somit eine Plausibilitätsprüfung und sorgt für die Richtigkeit der späteren Rechnungstellung. Insbesondere werden Fehler vermieden, wenn Artikelcodes nicht unmittelbar auf einer Verpackung des Artikels aufgebracht sind, sondern beispielsweise an einer Verkaufsfläche, einem Regal, einem Aufsteller oder einer Palette in der Verkaufsumgebung. Beispielsweise kann ein Regal der Verkaufsumgebung einen in einen Gang ragenden Arm oder ein an einer Kette oder ähnlichem angebrachtes Etikett mit einem Artikelcode aufweisen, welchen der Nutzer unter das Erfassungsgerät seines Einkaufskorbs führt.

Vorzugsweise werden in einem selbstlernenden Verfahren Zuordnungen von Artikelcodes und Artikelgewichten in einem Speicher des Erfassungsgeräts oder einem externen Speicher, zu welchem das Erfassungsgerät eine Kommunikationsverbindung aufweist, gespeichert. Somit können Artikel, welche in den Einkaufskorb gelegt werden, nicht nur in Bezug auf ihren Artikelcode erfasst werden, sondern vielmehr auch gewogen werden. Die Artikelcodes können zusammen mit dem gewöhnlichen Gewicht des korrespondierenden Artikels abgespeichert werden, so dass in einem Datenspeicher hinterlegt ist, dass beispielsweise ein Päckchen Butter immer 250 g beinhaltet. Insofern ist es nicht erforderlich, dass ein Betreiber der Verkaufsumgebung derartige Daten manuell speichert und pflegt. Vielmehr erfolgt die Erfassung und auch spätere kontinuierliche Überprüfung vollautomatisch im Rahmen der Warenerfassung durch das Erfassungsgerät des Einkaufskorbs und eine korrespondierende künstliche Intelligenz. Falls das Erfassungsgerät beispielsweise wiederholt feststellt, dass ein einem bestimmten Artikelcode zugeordneter Artikel stets ein bestimmtes (identisches oder hochgradig ähnliche) Gewicht aufweist, kann dieses Gewicht dem Artikelcode in dem Datenspeicher zugeordnet werden und als Referenz im Rahmen einer späteren Überprüfung herangezogen werden.

Das Erfassungsgerät oder eine damit in Datenkommunikation stehende Recheneinrichtung kann somit ein von der Wägeeinrichtung bereitgestelltes Gewicht des in die Einkaufsartikelaufnahmeeinrichtung gelegten Artikels in Bezug auf Plausibilität prüfen, indem das aktuell bereitgestellte Gewicht mit dem für diesen Artikel in dem Datenspeicher gespeicherten Gewicht verglichen wird. Bevorzugt wird im Falle eines negativen Ergebnisses der Plausibilitätsprüfung eine Fehlermeldung durch insbesondere eine optische und/oder akustische Ausgabeeinrichtung des Einkaufskorbs ausgegeben. Die Fehlermeldung kann in Textform, als Bild, Symbol, Leuchtanzeige, Ton oder dergleichen ausgegeben werden. Hierdurch können menschliche und auch technische Fehler bei dem Erfassen des Artikelcodes vermieden werden, insbesondere wenn ein Artikelcode auf dem Artikel nicht einwandfrei lesbar ist und somit falsch gelesen und gespeichert wird oder ein falscher Artikelcode auf dem Artikel angebracht ist. Alternativ oder zusätzlich kann eine Fehlermeldung mittels einer Kommunikationseinrichtung des Einkaufskorbs an ein Kassensystem der Verkaufsumgebung übermittelt werden.

Die vorgeschlagene Wägeeinrichtung der Einkaufsartikelaufnahmeeinrichtung des Einkaufskorbs weist insbesondere eine Wägezelle auf, welche von üblichen Kraftsensoren, beispielsweise Dehnungsmessstreifen oder Piezoelementen, Gebrauch macht. Darüber hinaus kann die Wägeeinrichtung eine zugeordnete Elektronik, insbesondere eine Recheneinrichtung, aufweisen, welche anhand des von dem Kraftsensor ausgegebenen Signals ein entsprechendes Gewicht ermittelt.

Die Wägeeinrichtung kann dem Handgriff und/oder einem Bodenbereich der Einkaufsartikelaufnahmeeinrichtung zugeordnet sein. In dem Fall, dass sich die Wägeeinrichtung in dem Bodenbereich der Einkaufsartikelaufnahmeeinrichtung befindet, kann sich diese zusätzlich entlang eines oder mehrerer Seitenwandbereiche der Einkaufsartikelaufnahmeeinrichtung erstrecken.

Sofern die Wägeeinrichtung in dem Handgriff angeordnet ist, werden alle in der Einkaufsartikelaufnahmeeinrichtung aufgenommenen Artikel präzise gemessen, insbesondere unabhängig von einer eventuellen Schrägstellung der Einkaufsartikelaufnahmeeinrichtung relativ zu der Umgebung, beispielsweise wenn der Nutzer den Einkaufskorb in seiner Hand schwenkt. Die Wägeeinrichtung erfasst das gesamte Gewicht, welches an dem Handgriff des Einkaufskorbs lastet. Sofern der Nutzer den Einkaufskorb somit mittels des Handgriffs von einer Unterlage hochhebt, entfaltet die Wägeeinrichtung ihre Funktion. Gegebenenfalls kann der Wägeprozess noch manuell durch einen Nutzer ausgelöst werden, indem dieser beispielsweise eine Betätigungstaste an dem Einkaufskorb, insbesondere an dem Handgriff, drückt, um die Wägeeinrichtung zu starten. Schwenkbewegungen des Einkaufskorbs können beispielsweise durch einen Neigungssensor und/oder Beschleunigungssensor erfasst und bei der Berechnung des Artikelgewichts berücksichtigt werden.

Sofern die Wägeeinrichtung in dem Bodenbereich und/oder dem Seitenwandbereich der Einkaufsartikelaufnahmeeinrichtung angeordnet ist, erfasst die Wägeeinrichtung Artikelgewichte auch dann, wenn der Einkaufskorb auf einer Unterlage abgestellt wird. Jeder Artikel, welcher auf dem Bodenbereich der Einkaufsartikelaufnahmeeinrichtung lastet, wird gemessen. Wenn auch die Seitenwandbereiche der Einkaufsartikelaufnahmeeinrichtung über eine Wägeeinrichtung verfügen, kann ein Artikelgewicht auch dann unmittelbar gemessen werden, wenn der Einkaufskorb relativ zu einer üblichen aufrechten Stellung verkippt ist.

Alternativ kann die Verkippung rechnerisch bei der Gewichtsermittlung berücksichtigt werden, sofern der Einkaufskorb beispielsweise einen Neigungssensor aufweist. Des Weiteren kann eine Recheneinrichtung des Einkaufskorbs oder eine externe Recheneinrichtung eine Plausibilitätsprüfung dahingehend ausführen, ob eine von einem Neigungssensor gemessene Neigung zu einer von den Wägeeinrichtungen detektierten Gewichtsverteilung eines Artikelgewichts auf den Bodenbereich und die Seitenwandbereiche korrespondiert.

In dem Fall, dass die Wägeeinrichtung dem Handgriff der Einkaufsartikelaufnahmeeinrichtung zugeordnet ist, kann die Wägeeinrichtung bevorzugt einem Verbindungsbereich zwischen dem Handgriff und der Einkaufsartikelaufnahmeeinrichtung so zugeordnet sein, dass eine gesamte an dem Handgriff angreifende Gewichtskraft der Einkaufsartikelaufnahmeeinrichtung inklusive darin eingebrachter Artikel detektierbar ist. Beispielsweise kann ein Kraftsensor, insbesondere ein Dehnungsmessstreifen, an einem Teil des Handgriffs angeordnet sein.

Sofern der Handgriff beispielsweise um eine Schwenkachse der Einkaufsartikelaufnahmeeinrichtung schwenkbar gelagert ist, kann ein Handgriff-Lagerteil oder ein Einkaufsartikelaufnahmeeinrichtungs-Lagerteil einen Kraftsensor aufweisen. Zum Beispiel kann der Handgriff an einem mit einer Schwenkachse der Einkaufsartikelaufnahmeeinrichtung in Kontakt tretenden Lagerbereich einen Dehnungsmessstreifen aufweisen. Sofern sich das in der Einkaufsartikelaufnahmeeinrichtung aufgenommene Gewicht erhöht, wird der Lagerbereich des Handgriffs gedehnt. Dieses Dehnungssignal wird von der Wägeeinrichtung bzw. einer damit in Kommunikationsverbindung stehenden Recheneinrichtung zu einem Artikelgewicht umgerechnet.

Gemäß einer Ausführungsform weist der Einkaufskorb einen in die Einkaufsartikelaufnahmeeinrichtung formkorrespondierend einsetzbaren Innenkorb auf. Die Form des Innenkorbs korrespondiert derart zu der Form der Einkaufsartikelaufnahmeeinrichtung, dass der Innenkorb passgenau in die Einkaufsartikelaufnahmeeinrichtung eingesetzt werden kann, insbesondere so, dass der Innenkorb bei einem Erschüttern oder Verschwenken des Einkaufskorbs nicht relativ zu der Einkaufsartikelaufnahmeeinrichtung verkippt, vibriert oder ähnliches. Beispielsweise kann eine Außenwandung des Innenkorbs Stege aufweisen, welche sich formkorrespondierend an die Innenwandung der Einkaufsartikelaufnahmeeinrichtung anlegen können. Einkaufsartikelaufnahmeeinrichtung und Innenkorb können somit möglichst spielfrei genestet werden. Besonders vorteilhaft bleibt der Einkaufskorb auch bei Verwendung mit einem solchen Innenkorb mit anderen gleichartigen Einkaufskörben nestbar, um diese möglichst platzsparend in der Verkaufsumgebung aufbewahren zu können.

Gemäß einer alternativen Ausführungsform kann ein in die Einkaufsartikelaufnahmeeinrichtung einsetzbarer Innenkorb selbst eine Wägeeinrichtung aufweisen. Diese Wägeeinrichtung wird dann bei Entfernen des Innenkorbs gleichzeitig mit aus der Einkaufsartikelaufnahmeeinrichtung entfernt. Des Weiteren ist es möglich, dass sowohl die Einkaufsartikelaufnahmeeinrichtung, als auch der Innenkorb eine Wägeeinrichtung aufweisen. Damit ist eine Redundanz geschaffen, die beispielsweise eine Plausibilitätsprüfung eines detektierten Gewichts erlaubt.

Sofern die Einkaufsartikelaufnahmeeinrichtung eine in einem Bodenbereich der Einkaufsartikelaufnahmeeinrichtung und ggf. zusätzlich eine in einem Seitenwandbereich angeordnete Wägeeinrichtung aufweist, liegt der Innenkorb in einem in die Einkaufsartikelaufnahmeeinrichtung eingesetzten Zustand auf der Wägeeinrichtung auf bzw. liegt an der Wägeeinrichtung der Seitenwandbereiche an. Der Innenkorb ist somit an der Wägeeinrichtung bzw. den Wägeeinrichtungen abgestützt, so dass ein in die Einkaufsartikelaufnahmeeinrichtung eingelegter Artikel mit seiner Gewichtskraft auf einen oder mehrere Kraftsensoren der Wägeeinrichtung bzw. Wägeeinrichtungen wirken kann. Sofern in dem Seitenwandbereich der Einkaufsartikelaufnahmeeinrichtung eine Wägeeinrichtung angeordnet ist, kann diese die Gewichtskraft eines Artikels zumindest dann teilweise detektieren, wenn die Einkaufsartikelaufnahmeeinrichtung gegenüber einer üblichen aufrechten Stellung des Einkaufskorbs verkippt ist.

Der Einkaufskorb kann einen der Einkaufsartikelaufnahmeeinrichtung zugeordneten Neigungssensor aufweisen, welcher eingerichtet ist, eine Neigung der Einkaufsartikelaufnahmeeinrichtung zu detektieren. Der Neigungssensor kann beispielsweise in eine Wandung der Einkaufsartikelaufnahmeeinrichtung integriert sein, beispielsweise in den Bodenbereich der Einkaufsartikelaufnahmeeinrichtung. Der Neigungssensor detektiert die Neigung und übermittelt das Detektionsergebnis an eine Recheneinrichtung des Einkaufskorbs oder eine in Kommunikationsverbindung mit dem Einkaufskorb stehende externe Recheneinrichtung. Das Signal des Neigungssensors oder der daraus ermittelte Neigungswert kann dann bei der Berechnung eines Artikelgewichts oder eines Gewichts der Einkaufsartikelaufnahmeeinrichtung mit darin befindlichen Artikeln berücksichtigt werden. Somit ist es möglich, Artikelgewichte auch dann präzise zu bestimmen, wenn der Nutzer den Einkaufskorb nicht aufrecht hält, sondern diesen beispielsweise verkippt oder der Einkaufskorb bei einer Bewegung des Nutzers durch die Verkaufsumgebung ggf. relativ zu dem Handgriff des Einkaufskorbs pendelt.

Bevorzugt weist der Einkaufskorb eine Speichereinrichtung zum Speichern des von dem Erfassungsgerät erfassten Artikelcodes und/oder zum Speichern eines von einer Wägeeinrichtung erfassten Gewichts eines Artikels und/oder eines Gewichts der Einkaufsartikelaufnahmeeinrichtung mit einem oder mehreren eingebrachten Artikeln und/oder zum Speichern einer von einem Neigungssensor erfassten Neigung der Einkaufsartikelaufnahmeeinrichtung auf. Alternativ oder Zusätzlich kann der Einkaufskorb eine Selbstlokalisationseinrichtung aufweisen und/oder eine Kommunikationseinrichtung zum Übermitteln und/oder Bereitstellen des von dem Erfassungsgerät erfassten Artikelcodes und/oder des von der Wägeeinrichtung erfassten Gewichts und/oder der von dem Neigungssensor erfassten Neigung an ein externes Gerät. Die vorgenannten Komponenten des Einkaufskorbs, nämlich Speichereinrichtung, Selbstlokalisationseinrichtung und/oder Kommunikationseinrichtung, können bevorzugt auf einer gemeinsamen Platine angeordnet sein, welche in einem oder an einem Körper der Einkaufsartikelaufnahmeeinrichtung angeordnet sind. In dem Fall, dass die Einkaufsartikelaufnahmeeinrichtung einen entnehmbaren Innenkorb aufweist, können diese Komponenten oder kann diese Platine beispielsweise zwischen einer Innenwandung der Einkaufsartikelaufnahmeeinrichtung und einer Außenwandung des Innenkorbs platziert sein. Besonders vorteilhaft ist eine Ausgestaltung, bei welcher der Innenkorb auf einer oder mehreren Wägeeinrichtungen abgestützt ist und die zugehörige Elektronik, beispielsweise umfassend die Speichereinrichtung, die Selbstlokalisationseinrichtung und die Kommunikationseinrichtung, zwischen mehreren Wägeeinrichtungen oder zwischen Teilbereichen derselben Wägeeinrichtung platziert ist, so dass die Wägeeinrichtung bzw. Wägeeinrichtungen als Abstandseinrichtung dienen, um ein Zwischenvolumen zur Aufnahme der Elektronik zu schaffen.

Sofern der Einkaufskorb mit einer Selbstlokalisationseinrichtung ausgestattet ist, kann diese beispielsweise ein GPS-Signal oder ein Signal eines in der Verkaufsumgebung angeordneten Senders empfangen, um die aktuelle Position des Einkaufskorbs möglichst präzise detektieren zu können. Dies kann der Verhinderung von Diebstahl des Einkaufskorbs und/oder einer Lokalisierung des Einkaufskorbs innerhalb der Verkaufsumgebung dienen, beispielsweise um eine Plausibilitätsprüfung bezüglich einer aktuellen Position des Einkaufskorbs und eines Standorts eines in den Einkaufskorb gelegten Artikels durchzuführen.

Der Einkaufskorb kann eine optische Ausgabeeinrichtung aufweisen. Diese optische Ausgabeeinrichtung kann beispielsweise ein Display und/oder Leuchtelemente wie LEDs aufweisen. Alternativ oder zusätzlich kann der Einkaufskorb eine akustische Ausgabeeinrichtung aufweisen, welche geeignet ist, einem Nutzer des Einkaufskorbs Töne und/oder Sprache zu übermitteln. Die Ausgabeeinrichtung ist bevorzugt fest mit dem Einkaufskorb verbunden und kann nicht ohne Werkzeug und/oder Zerstörung davon getrennt werden. Mittels der optischen und/oder akustischen Ausgabeeinrichtung kann der Nutzer auf einen Fehler bei dem Erfassen von Artikeln aufmerksam gemacht werden oder andere Informationen erhalten, beispielsweise eine Information über einen Preis eines erfassten Artikels. Auch Werbeinformationen können dem Nutzer so übermittelt werden. Die optische und/oder akustische Ausgabeeinrichtung kann dem Handgriff oder der Einkaufsartikelaufnahmeeinrichtung zugeordnet sein.

Des Weiteren kann der Einkaufskorb eine Eingabeeinrichtung zum Empfang von Eingaben eines Nutzers aufweisen. Insbesondere dient die Eingabeeinrichtung zur Betätigung des Erfassungsgeräts. Sofern der Nutzer einen Artikel erfassen möchte, welchen er in die Einkaufsartikelaufnahmeeinrichtung legt, kann er zunächst die Eingabeeinrichtung, beispielsweise einen Druckknopf, einen Schieber oder ähnliches, betätigen, um die Funktion des Erfassungsgeräts zu starten. Somit ist das Erfassungsgerät nicht permanent aktiv, sondern nur dann, wenn der Nutzer dies veranlasst. Um zu vermeiden, dass der Nutzer einen Artikel in die Einkaufsartikelaufnahmeeinrichtung legt ohne das Erfassungsgerät vorher zu aktivieren, kann mittels einer Wägeeinrichtung des Einkaufskorbs vorzugsweise permanent eine Gewichtserhöhung des Einkaufskorbs detektiert werden, wobei in dem Fall, dass eine Gewichtserhöhung ohne nahezu zeitgleiches Erfassen eines Artikelcodes detektiert wird, eine Nachricht an einen Nutzer des Einkaufskorbs ausgegeben wird. Die Nachricht kann einen Hinweis erhalten, dass der Artikelcode nach Anschalten des Erfassungsgerätes nochmals unter das Erfassungsgerät geführt werden muss.

Die Ausgabeeinrichtung und/oder die Eingabeeinrichtung des Einkaufskorbs kann in und/oder an dem Öffnungsrand der Einkaufsartikelaufnahmeeinrichtung und/oder dem Handgriff angeordnet sein. Insbesondere der Handgriff ist für die Platzierung vorteilhaft, da der Nutzer diesen ohnehin in der Hand hält und ggf. bloß einen Finger ausstrecken muss, um die Ausgabeeinrichtung und/oder die Eingabeeinrichtung zu betätigen. Ausgehend von einer Handgriffmitte, in welcher der Nutzer den Handgriff üblicherweise anfasst (d.h. eine Mitte bezogen auf die Längserstreckung des Handgriffs) kann die Ausgabeeinrichtung und/oder Eingabeeinrichtung bevorzugt um die Länge eines Daumens oder Zeigefingers entfernt sein, beispielsweise zwischen 3 cm und 13 cm, insbesondere zwischen 5 cm und 10 cm. Auch der Öffnungsrand ist für den Nutzer leicht zugänglich und kann zum Eingeben, Senden und/oder Empfangen von Informationen zwischen dem Einkaufskorb und dem Nutzer dienen.

Schließlich kann die Wägeeinrichtung redundante Wägeeinrichtungen aufweisen, insbesondere mindestens zwei Teilwägeeinrichtungen, wobei eine erste Teilwägeeinrichtung dem Handgriff zugeordnet ist und eine zweite Teilwägeeinrichtung dem Bodenbereich zugeordnet ist, und wobei der Einkaufskorb eine Recheneinrichtung aufweist, welche eingerichtet ist, ein von der ersten Teilwägeeinrichtung detektiertes Signal mit einem von der zweiten Teilwägeeinrichtung detektierten Signal zu vergleichen. Durch diese Ausgestaltung des Einkaufskorbs kann einerseits eine Plausibilitätsprüfung des von einer der Teilwägeeinrichtungen ermittelten Gewichts erfolgen. Andererseits können etwaige Störsignale, welche von beiden Teilwägeeinrichtungen erfasst werden, rechnerisch aus dem Detektionssignal entfernt werden, damit das Gewicht von der Recheneinrichtung des Einkaufskorbs präzise erfasst werden kann.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Wägeeinrichtung die Rede ist, ist dies so zu verstehen, dass genau eine Wägeeinrichtung, zwei Wägeeinrichtungen oder mehr Wägeeinrichtungen vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter Ausführungsbeispiele erläutert und beschrieben.
- **Fig. 1**: zeigt einen erfindungsgemäßen Einkaufskorb gemäß einer möglichen Ausführungsform.
- **Fig. 2**: zeigt einen Einkaufskorb gemäß einer weiteren möglichen Ausführungsform in Kommunikation mit einem externen Endgerät.
- **Fig. 3**: zeigt eine weitere Ausführungsform eines Einkaufskorbs.
- **Fig. 4**: zeigt eine weitere Ausführungsform eines Einkaufskorbs.
- **Fig. 5**: zeigt einen Einkaufskorb mit einer Selbstlokalisationseinrichtung.
- **Fig. 6**: zeigt einen als Trolley ausgebildeten Einkaufskorb.
- **Fig. 7**: zeigt ein Kassensystem mit einer Wägeeinrichtung zum Wiegen eines Einkaufskorbs.

### FIGURENBESCHREIBUNG

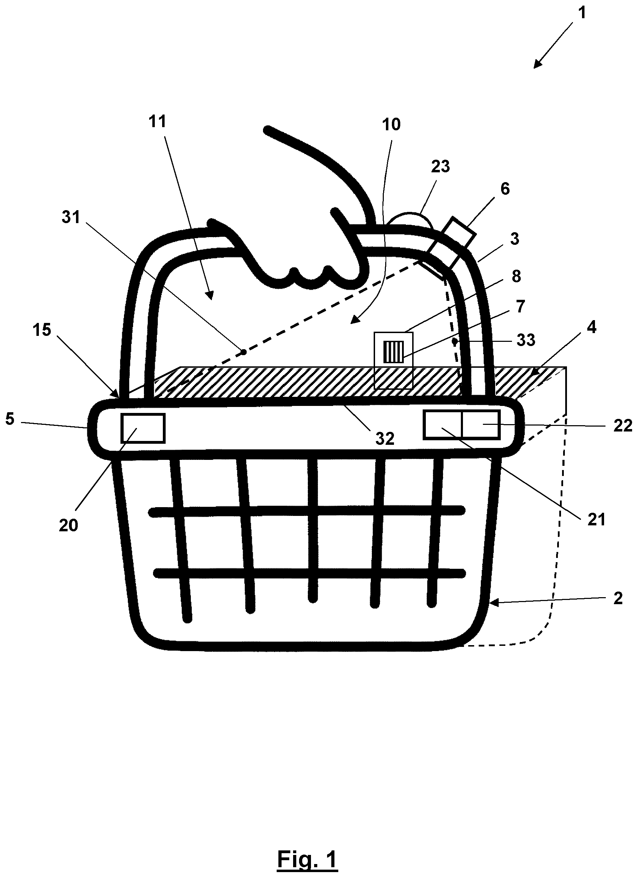

**Fig. 1** zeigt eine erste mögliche Ausführungsform eines erfindungsgemäßen Einkaufskorbs 1. Der Einkaufskorb 1 weist eine Einkaufsartikelaufnahmeeinrichtung 2 und einen in einer üblichen Tragestellung ausgehend von der Einkaufsartikelaufnahmeeinrichtung 2 hochstehenden Handgriff 3 auf, welcher hier beispielsweise schwenkbar an der Einkaufsartikelaufnahmeeinrichtung 2 gelagert ist.

An der Oberseite der Einkaufsartikelaufnahmeeinrichtung 2 befindet sich eine von einem Öffnungsrand 5 umgebene Öffnung. Die Öffnung erstreckt sich in einer zeichnerisch angedeuteten Öffnungsebene 4. Oberhalb der Öffnungsebene 4 befindet sich an dem Handgriff 3 ein Erfassungsgerät 6, hier beispielsweise ein Barcodescanner. Dem Erfassungsgerät 6 ist eine Eingabeeinrichtung 23 in Form eines Druckknopfes zugeordnet, mit welchem das Erfassungsgerät 6 gestartet und ggf. wieder abgeschaltet werden kann. Alternativ kann sich das Erfassungsgerät 6 nach einer bestimmten Zeit oder nach Durchführen eines Scanvorgangs automatisch wieder abschalten.

Das Erfassungsgerät 6 dient zum Erfassen von Artikelcodes 7 von in die Einkaufsartikelaufnahmeeinrichtung 2 gelegten Artikeln 8. In Fig. 1 ist beispielhaft ein Artikel 8 dargestellt. Das Erfassungsgerät 6 weist einen Erfassungsbereich 10 auf, welcher denjenigen Bereich definiert, den das Erfassungsgerät 6 überwachen kann, d. h. in welchem das Erfassungsgerät 6 einen Artikelcode 7 detektieren kann. Der Erfassungsbereich 10 liegt hier in einem Volumenbereich 11, der im Wesentlichen von dem aufgestellten Handgriff 3 und der Öffnungsebene 4 der Einkaufsartikelaufnahmeeinrichtung 2 aufgespannt ist, wobei dieser Volumenbereich 11 beispielsweise pyramidenförmig ausgebildet ist und bezogen auf einen Querschnitt orthogonal zu der Blattebene sowie bezogen auf einen Längsschnitt parallel zu der Blattebene der Fig. 1 dreieckförmig aussieht. Der gestrichelt angedeutete dreieckförmige Querschnitt des Volumenbereichs 11 weist zwei Schenkel 31, 33 auf, welche sich jeweils von einem Randbereich des Öffnungsrands 5 zu dem Handgriff 3 erstrecken und einen Schenkel 32, welcher die bezogen auf die Öffnung gegenüberliegenden Randbereiche des Öffnungsrands 5 verbindet.

In den Öffnungsrand 5 der Einkaufsartikelaufnahmeeinrichtung 2 sind des Weiteren eine optische Ausgabeeinrichtung 21, hier beispielsweise ein Display, und eine akustische Ausgabeeinrichtung 22, hier beispielsweise ein Lautsprecher, integriert. Die Ausgabeeinrichtungen 21, 22 dienen der Information eines Nutzers des Einkaufskorbs 1 bezüglich eines durchgeführten erfolgreichen Erfassungsvorgangs eines Artikels 8 mittels des Erfassungsgeräts 6 und ggf. einer Information über einen dem Artikel 8 zugeordneten Preis oder auch Werbeinformationen, welche diesen oder andere Artikel 8 der Verkaufsumgebung betreffen.

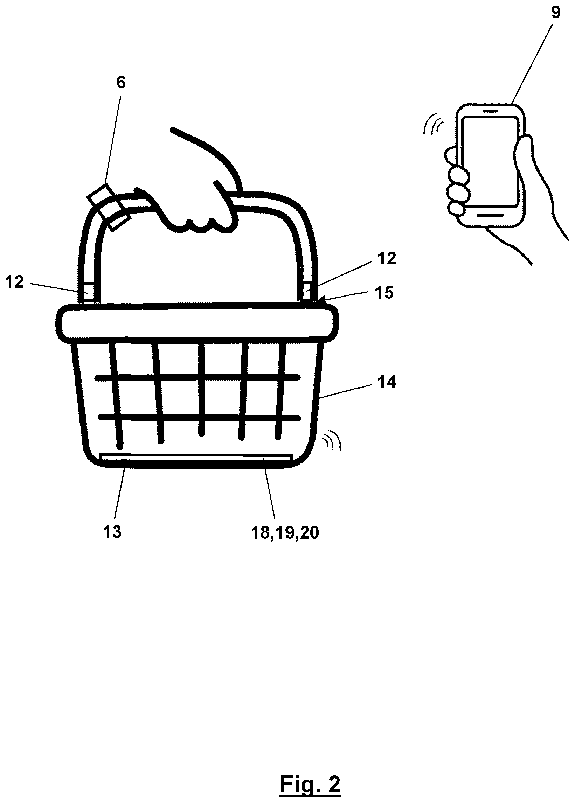

In den Öffnungsrand 5 der Einkaufsartikelaufnahmeeinrichtung 2 ist des Weiteren eine Kommunikationseinrichtung 20 integriert, welche eingerichtet und ausgebildet ist, die Detektionssignale von dem Erfassungsgerät 6 zu empfangen und/oder auszulesen und gegebenenfalls an eine zu dem Einkaufskorb 1 externe Recheneinrichtung (in Fig. 1 nicht dargestellt) zu übermitteln. Gegebenenfalls kann das Erfassungsgerät 6 jedoch auch direkt mit einer Recheneinrichtung des Einkaufskorbs 1 und/oder einem externen Endgerät 9 (siehe beispielsweise Fig. 2) kommunizieren.

Das Erfassungsgerät 6 ist relativ zu dem Handgriff 3 so positioniert und in Bezug auf seinen Erfassungsbereich 10 so fixiert, dass das Erfassungsgerät 6 und dessen Erfassungsbereich 10 stets dieselbe Position und Orientierung relativ zu dem Handgriff 3 aufweist. Der Handgriff 3 kann durch einen Nutzer nicht ohne Zerstörung des Handgriffs 3 und/oder des Erfassungsgeräts 6 von dem Handgriff 3 entfernt werden. Der Erfassungsbereich 10 des Erfassungsgeräts 6 ist darüber hinaus relativ zu der von dem Handgriff 3 aufgespannten vertikalen Projektionsebene (in der Stellung des Handgriffs 3 gemäß Fig. 1) stets konstant. Somit ist der Erfassungsbereich 13 immer so ausgerichtet, dass er die Öffnungsebene 4 der Einkaufsartikelaufnahmeeinrichtung 2 überwacht, sobald der Nutzer den Handgriff 3 in seiner Hand hält und der Einkaufskorb 1 angehoben ist. Dieser Zustand ist in Fig. 1 dargestellt.

**Fig. 2** zeigt einen Einkaufskorb 1 sowie ein externes Gerät 9 in Form eines Mobiltelefons. Der Einkaufskorb 1 verfügt gemäß dieser Ausführungsform in einem Bodenbereich 13 der Einkaufsartikelaufnahmeeinrichtung 2 über eine Elektronikeinheit, welche hier beispielweise eine Recheneinrichtung 18, eine Speichereinrichtung 19 und eine Kommunikationseinrichtung 20 umfasst. Die Kommunikationseinrichtung 20 ist ausgebildet, einerseits mit dem Erfassungsgerät 6 des Einkaufskorbs 1 und andererseits mit einer entsprechenden Kommunikationseinrichtung (nicht dargestellt) des externen Endgeräts 9 zu kommunizieren, was drahtlos oder drahtgebunden erfolgen kann. Die Recheneinrichtung 18 und die Speichereinrichtung 19 des Einkaufskorbs 1 können aus dem Erfassungsgerät 6 ausgelesene Detektionssignale verarbeiten und/oder speichern und dann gegebenenfalls mittels der Kommunikationseinrichtung 20 an das externe Gerät 9 weiterleiten. Die dargestellte Elektronikeinrichtung kann in eine Wandung der Einkaufsartikelaufnahmeeinrichtung 2 integriert sein oder von innen auf diese aufgesetzt sein.

Der dargestellte Einkaufskorb 1 weist zudem in einem Verbindungsbereich 15 zwischen dem Handgriff 3 und der Einkaufsartikelaufnahmeeinrichtung 2 eine Wägeeinrichtung 12 auf. Diese Wägeeinrichtung 12 ist an beiden Endbereichen des U-förmig ausgebildeten Handgriffs 3 angeordnet, nämlich dort, wo der Handgriff 3 an einer Schwenkachse der Einkaufsartikelaufnahmeeinrichtung 2 schwenkbar gelagert ist. Gegebenenfalls kann der Handgriff 3 auch fest, das heißt nicht schwenkbar, mit der Einkaufsartikelaufnahmeeinrichtung 2 beziehungsweise deren Öffnungsrand 5 verbunden sein. Es empfiehlt sich jedoch, insbesondere für eine Nestbarkeit gleichartiger Einkaufskörbe 1, den Handgriff 3 schwenkbar auszubilden, sodass dieser auf den Öffnungsrand 5 und/oder an einen Umfangsbereich des Öffnungsrands 5 der Einkaufsartikelaufnahmeeinrichtung 2 gelegt werden kann.

Die Wägeeinrichtung 12 weist beispielsweise Dehnungsmessstreifen und/oder Piezoelemente als Kraftsensoren auf. Bei einer Gewichtserhöhung der Einkaufsartikelaufnahmeeinrichtung 2 oder der darin befindlichen Artikel 8 wird der Handgriff 3 und damit auch ein daran angeordneter Dehnungsmessstreifen und/oder ein Piezoelement minimal gedehnt. Ein die Dehnung repräsentierendes Signal wird von einer Auswerteelektronik der Wägeeinrichtung 2 detektiert. Anhand dieses Signals kann dann eine Recheneinrichtung 18 der Wägeeinrichtung 12, des Einkaufskorbs 1 oder eines externen Endgeräts 9 ein Gewicht des in den Einkaufskorb 1 gelegten Artikels 8 ermitteln.

Durch einen Vergleich des ermittelten Gewichts des Artikels mit gespeicherten Referenz-Gewichtsdaten des Artikels 8 kann festgestellt werden, ob der von dem Erfassungsgerät 6 erfasste Artikelcode 7 zu dem Gewicht des in den Einkaufskorb 1 gelegten Artikels 8 korrespondiert. Somit erfolgt eine Plausibilitätsprüfung dahingehend, ob ein Nutzer des Einkaufskorbs 1 tatsächlich denjenigen Artikel 8 einscannt, welchen er in die Einkaufsartikelaufnahmeeinrichtung 2 legt. Damit können sowohl technische Fehler und manuelle Fehler, beispielsweise beim Preisauszeichnen der Artikel 8, festgestellt werden, als auch Betrugsversuche durch einen Nutzer.

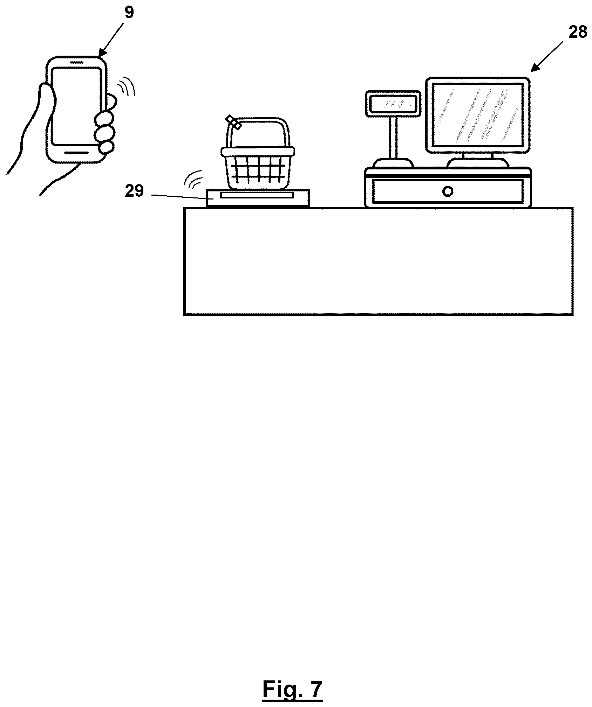

Die Speichereinrichtung 19 des Einkaufskorbs 1 speichert die Artikelcodes 7 von in die Einkaufsartikelaufnahmeeinrichtung 2 gelegten Artikeln 8 und legt eine Liste oder Tabelle an. Für einen Bezahlvorgang kann der Nutzer anschließend beispielsweise mittels seines externen Geräts 9, insbesondere über eine besondere, auf dem mobilen externen Gerät 9 installierte Applikation, veranlassen, dass die in der lokalen Speichereinrichtung 19 des Einkaufskorbs 1 gespeicherten Artikelcodes 7 mittels der Kommunikationseinrichtung 20 des Einkaufskorbs 1 an ein Kassensystem 28 übermittelt werden (siehe beispielsweise Fig. 7). Das Kassensystem 28 ermittelt anhand der gespeicherten und empfangenen Artikelcodes 7 den Artikeln 8 zugeordnete Preise und erstellt eine Gesamtsumme, die dem Nutzer des Einkaufskorb 1 in Rechnung gestellt werden kann. Diesen Gesamtpreis kann der Nutzer dann insbesondere bargeldlos oder auch mittels Bargeld entrichten.

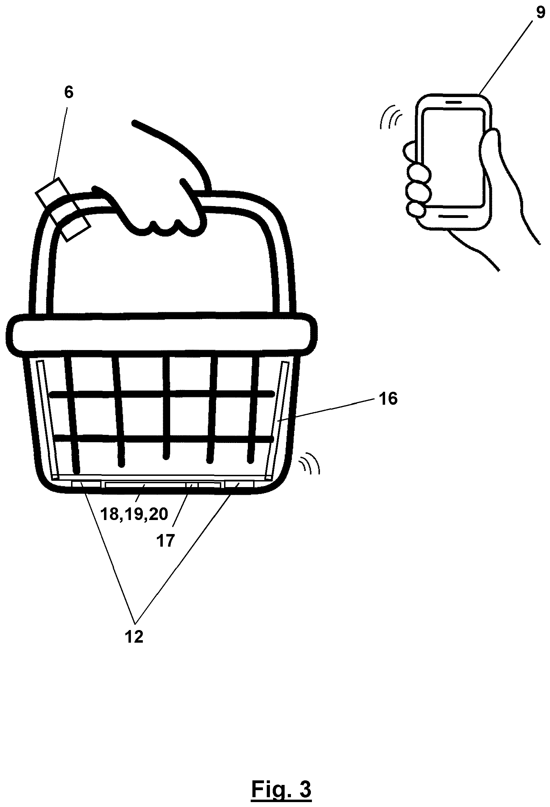

**Fig. 3** offenbart einen Einkaufskorb 1 gemäß einer weiteren möglichen Ausführungsform. Der Einkaufskorb 1 verfügt wie in zuvor beschriebener Art und Weise über ein Erfassungsgerät 6 zum Erfassen von Artikelcodes 7 von Artikeln 8. Die Einkaufsartikelaufnahmeeinrichtung 2 dieses Einkaufskorbs 1 verfügt über einen Innenkorb 16, der formkorrespondierend in die Einkaufsartikelaufnahmeeinrichtung 2 eingesetzt ist. Der Innenkorb 16 kann nach Bedarf aus der Einkaufsartikelaufnahmeeinrichtung 2 entfernt werden und in diese eingesetzt werden.

Der Innenkorb 16 steht in einem Bodenbereich 13 der Einkaufsartikelaufnahmeeinrichtung 2 in Kontakt mit einer, hier beispielsweise ringförmig ausgebildeten Wägeeinrichtung 12. Dabei liegt der Innenkorb 16 mit einer Unterseite auf der Wägeeinrichtung 12 auf. Im Bereich der kreisförmigen Aussparung der Wägeeinrichtung 12 ist eine Platine aufgenommen, welche eine Recheneinrichtung 18, eine Speichereinrichtung 19, eine Kommunikationseinrichtung sowie einen Neigungssensor 17 aufweist.

Der Neigungssensor 17 ist ausgebildet, eine Neigung der Einkaufsartikelaufnahmeeinrichtung 2 relativ zu der Umgebung zu detektieren. Auf diese Art und Weise kann die Recheneinrichtung 18 ein von der Wägeeinrichtung 12 ermitteltes Gewicht der Einkaufsartikelaufnahmeeinrichtung 2 sowie der darin aufgenommenen Artikel 8 berechnen, auch dann, wenn die Einkaufsartikelaufnahmeeinrichtung 2 nicht optimal aufrecht orientiert ist, sondern bezogen auf deren Öffnungsebene 4 relativ zu einer Horizontalen verkippt ist. Die Recheneinrichtung 18 kann das ermittelte und um die Neigung bereinigte Gewicht dann mit in der Speichereinrichtung 19 hinterlegten Referenz-Gewichten für einen Artikel 8 mit dem erfassten Artikelcode 7 vergleichen. Sofern keine Übereinstimmung besteht, kann der Nutzer beispielsweise durch eine optische und/oder akustische Ausgabeeinrichtung 21, 22 (siehe Fig. 1) über den Fehler informiert werden.

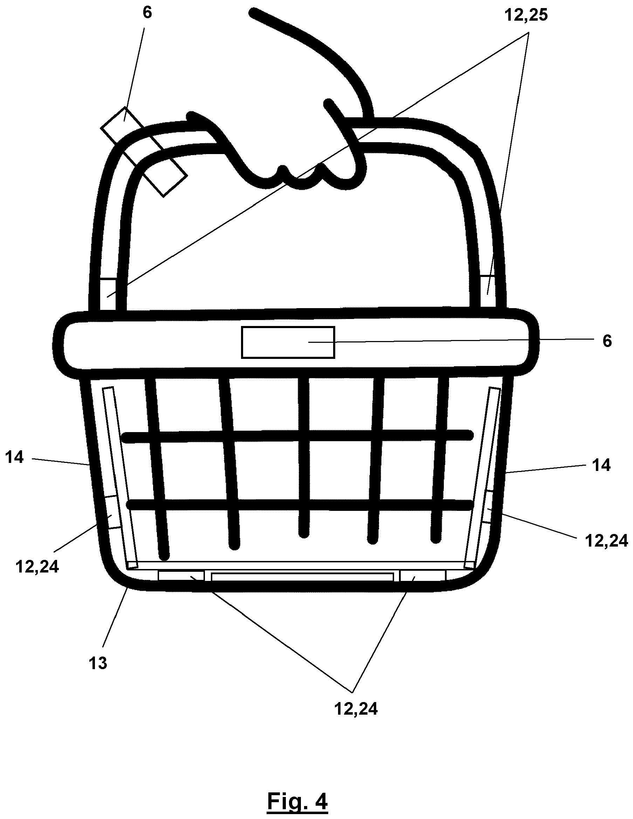

**Fig. 4** zeigt einen Einkaufskorb 1 mit einer Wägeeinrichtung 12, welche eine erste Teilwägeeinrichtung 24 in einem Bodenbereich 13 und einem Seitenwandbereich 14 der Einkaufsartikelaufnahmeeinrichtung 2 und eine zweite Teilwägeeinrichtung 25 in einem Verbindungsbereich 15 zwischen dem Handgriff 3 und dem Öffnungsrand 5 der Einkaufsartikelaufnahmeeinrichtung 2 aufweist. Die in dem Bodenbereich 13 und dem Seitenwandbereich 14 der Einkaufsartikelaufnahmeeinrichtung 2 angeordnete Teilwägeeinrichtung 24 und die in dem Verbindungsbereich 15 des Handgriffs 3 angeordnete zweite Teilwägeeinrichtung 25 arbeiten in der Art und Weise miteinander, dass die von diesen Teilwägeeinrichtungen 24, 25 detektierten Signale an eine Recheneinrichtung 18 (nicht dargestellt) des Einkaufskorbs 1 übermittelt werden und dort in Bezug auf übereinstimmende Gewichtsmessungen verglichen werden. Sofern die ermittelten Gewichte beispielsweise mehr als 5 %, 10 % oder andere definierte Werte voneinander abweichen, kann auf einen Fehler der Wägeeinrichtung 12 geschlossen werden. Des Weiteren weist dieser Einkaufskorb 1 gemäß einer möglichen Ausführung ein Erfassungsgerät 6 zum Erfassen des Artikelcodes 7 auf, welches Erfassungsgerät 6 in dem Öffnungsrand 5 der Einkaufsartikelaufnahmeeinrichtung 2 angeordnet ist. Zusätzlich dazu weist auch der Handgriff 3 ein Erfassungsgerät 6 auf. Die beiden Erfassungsgeräte 6 arbeiten in der Art und Weise zusammen, dass sich deren Erfassungsbereiche 10 ergänzen und einerseits den Bereich unter dem Handgriff 3 und andererseits die Öffnungsebene 4 in Bezug auf die Präsenz von Artikelcodes 7 überwachen. Auch diesbezüglich können die Signale der Erfassungsgeräte 6 für eine Plausibilitätsprüfung miteinander verglichen werden.

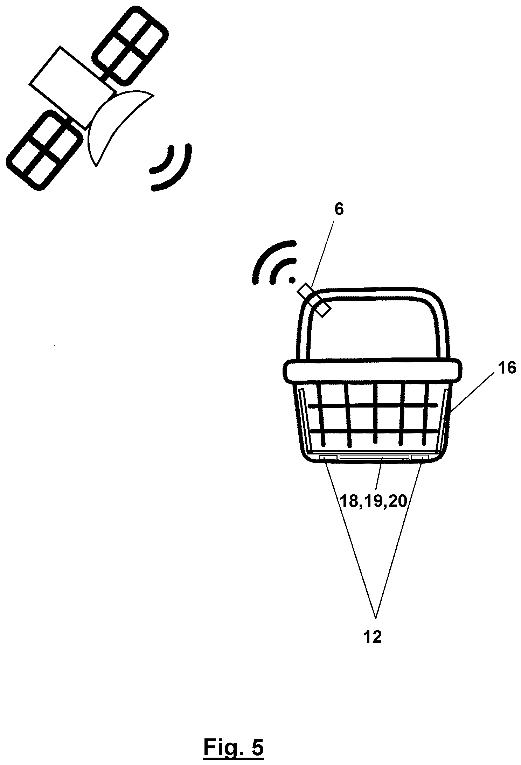

**Fig. 5** zeigt ein Erfassungsgerät 6, welches gleichzeitig die Funktion einer Selbstlokalisationseinrichtung aufweist und eingerichtet ist, die Signale eines GPS-Senders zu empfangen und anhand dieser die eigene räumliche Position des Einkaufskorbs 1 in einer Verkaufsumgebung zu ermitteln. Die Recheneinrichtung 18 des Einkaufskorbs 1 oder eine in Kommunikationsverbindung mit dem Einkaufskorb 1 stehende externe Recheneinrichtung kann anhand dieser Information darauf schließen, ob der Einkaufskorb 1 beispielsweise aus der Verkaufsumgebung entwendet wurde oder ob ein Erfassen eines bestimmten Artikelcodes 7 an einem aktuellen Ort des Einkaufskorbs 1 plausibel ist.

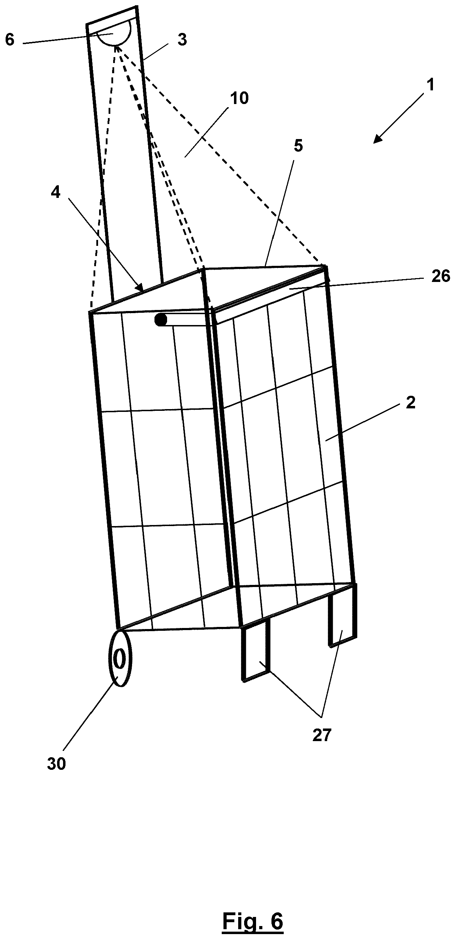

**Fig. 6** zeigt eine andere Art eines Einkaufskorbs 1. Dieser Einkaufskorb 1 ist als verfahrbarer Trolley ausgebildet und verfügt über zwei an einem Bodenbereich 13 der Einkaufsartikelaufnahmeeinrichtung 2 angeordnete Rollen 30 und zwei dem Paar von Rollen 30 gegenüberliegende Standfüße 27. Bei einer Verlagerung des Einkaufskorbs 1 in eine Schrägstellung kann der Nutzer den Einkaufskorb 1 mittels der Rollen 30 durch eine Verkaufsumgebung schieben oder ziehen. Sofern der Einkaufskorb 1 abgestellt wird, ruht dieser einerseits auf den Standfüßen 27, und andererseits auf den Rollen 30. An der Oberseite der Einkaufsartikelaufnahmeeinrichtung 2 ist im Bereich des Öffnungsrandes 5 ein Handgriff 3 angeordnet, welcher beispielsweise teleskopartig an die Körpergröße eines Nutzers angepasst werden kann. Darüber hinaus verfügt der Einkaufskorb 1 im Bereich seines Öffnungsrandes 5 über einen verschwenkbar an der Einkaufsartikelaufnahmeeinrichtung 2 gelagerten Zusatzgriff 26. Mittels des Zusatzgriffs 26 kann der Nutzer den Einkaufskorb 1 besonders einfach anheben.

Des Weiteren verfügt der Einkaufskorb 1 über ein hier an dem teleskopierbaren Handgriff 3 angeordnetes Erfassungsgerät 6. Zusätzlich oder alternativ kann das Erfassungsgerät 6 an dem Öffnungsrand 5 der Einkaufsartikelaufnahmeeinrichtung 2 angeordnet sein. Wesentlich ist, dass das Erfassungsgerät 6 derart positioniert ist, dass es die Öffnung 4 der Einkaufsartikelaufnahmeeinrichtung 2 in Bezug auf die Artikelcodes 7 von in die Einkaufsartikelaufnahmeeinrichtung 2 eingelegten Artikeln 8 überwacht. Besonders bevorzugt wird ein Erfassungsbereich 10 des Erfassungsgeräts 6 in Abhängigkeit von der aktuellen Länge des teleskopierbaren Handgriffs 3 nachjustiert. Alternativ kann der Erfassungsbereich 10 so bemessen sein, dass er die Öffnung bei einer Vielzahl von Stellungen des Handgriffs 3 bzw. des Erfassungsgeräts 6 noch abdeckt.

Gegebenenfalls kann zusätzlich an dem Öffnungsrand 5 der Einkaufsartikelaufnahmeeinrichtung 2 ein weiteres Erfassungsgerät 6 angeordnet sein (oder nur in diesem Bereich) um die Öffnungsebene 4 unabhängig von der aktuellen Position und Länge des teleskopierbaren Handgriffs 3 sicher überwachen zu können. Im Übrigen kann auch ein als Trolley ausgebildeter Einkaufskorb 1 die zuvor in Bezug auf die anderen Figuren 1 bis 5 beschriebenen Merkmale aufweisen, insbesondere in Bezug auf die Ausbildung und Funktionsweise der Elektronik. Insbesondere bei einem als Trolley ausgebildeten Einkaufskorb 1 kann eine Wägeeinrichtung 12 des Weiteren einer Rolle 30, einem Gleitelement, einem Standfuß 27und/oder einem Fahrwerk zugeordnet sein.

**Fig. 7** zeigt schließlich ein Kassensystem 28 mit einer externen Wägeeinrichtung 29. Die externe Wägeeinrichtung 29 ist ausgebildet, ein Gewicht eines auf der externen Wägeeinrichtung 29 platzierten Einkaufskorbs 1 zu messen. Die Gewichte der in die Einkaufsartikelaufnahmeeinrichtung 2 eingebrachten Artikel 8, insbesondere das von der eigenen Wägeeinrichtung 12 des Einkaufskorbs 1 ermittelte Gewicht, können somit bezüglich einer Plausibilität geprüft werden. Beispielsweise kann ein zuvor aufaddiertes Gesamtgewicht der eingebrachten Artikel 8 mit dem durch die externe Wägeeinrichtung 29 gemessenen Gesamtgewicht verglichen werden. Sodann, bei positiver Plausibilitätsprüfung, kann das Kassensystem 28 dann einen Gesamtpreis für die von dem Nutzer gesammelten Artikel 8 ermitteln. Hierzu wird die aus einer Speichereinrichtung 19 des Einkaufskorbs 1 und/oder des externen Geräts 9 entnommene Artikelliste hergenommen, um jedem Artikel 8 einen definierten Preis zuzuordnen und dann einen Gesamtpreis aufzuaddieren. Anschließend kann der Nutzer einen bargeldlosen Bezahlvorgang durchführen oder wahlweise auch mit Bargeld bezahlen.

### BEZUGSZEICHENLISTE

- 1: Einkaufskorb
- 2: Einkaufsartikelaufnahmeeinrichtung
- 3: Handgriff
- 4: Öffnungsebene
- 5: Öffnungsrand
- 6: Erfassungsgerät
- 7: Artikelcode
- 8: Artikel
- 9: Externes Gerät
- 10: Erfassungsbereich
- 11: Volumenbereich
- 12: Wägeeinrichtung
- 13: Bodenbereich
- 14: Seitenwandbereich
- 15: Verbindungsbereich
- 16: Innenkorb
- 17: Neigungssensor
- 18: Recheneinrichtung
- 19: Speichereinrichtung
- 20: Kommunikationseinrichtung
- 21: Ausgabeeinrichtung
- 22: Ausgabeeinrichtung
- 23: Eingabeeinrichtung
- 24: Teilwägeeinrichtung
- 25: Teilwägeeinrichtung
- 26: Zusatzgriff
- 27: Standfuß
- 28: Kassensystem
- 29: Externe Wägeeinrichtung
- 30: Rolle
- 31: Schenkel
- 32: Schenkel
- 33: Schenkel

## Patentansprüche

1. Einkaufskorb (1) mit einer Einkaufsartikelaufnahmeeinrichtung (2) und einem Handgriff (3), wobei der Handgriff (3) oberhalb einer Öffnungsebene (4) einer von einem Öffnungsrand (5) umgebenen Öffnung der Einkaufsartikelaufnahmeeinrichtung (2) angeordnet ist, wobei dem Öffnungsrand (5) der Einkaufsartikelaufnahmeeinrichtung (2) und/oder dem Handgriff (3) ein Erfassungsgerät (6) zum Erfassen eines Artikelcodes (7) eines in die Einkaufsartikelaufnahmeeinrichtung eingebrachten oder einzubringenden Artikels (8) zugeordnet ist, wobei das Erfassungsgerät (6) eine Einrichtung zum Bereitstellen und/oder Senden und/oder Speichern des Artikelcodes aufweist, **dadurch gekennzeichnet, dass** das Erfassungsgerät (6) nicht ohne Werkzeug lösbar mit dem Öffnungsrand (5) der Einkaufsartikelaufnahmeeinrichtung (2) und/oder dem Handgriff (3) verbunden ist, wobei in dem an dem Handgriff (3) getragenen Zustand des Einkaufskorbs (1) ein Erfassungsbereich (10) des Erfassungsgeräts (6) relativ zu der Öffnung der Einkaufsartikelaufnahmeeinrichtung (2) konstant so bemessen und ausgerichtet ist, dass dieser die Öffnung und einen zwischen dem Handgriff (3) und der Öffnung aufgespannten Volumenbereich (11) erfasst.

2. Einkaufskorb (1) nach Anspruch 1, **wobei** die Einkaufsartikelaufnahmeeinrichtung (2) eine Wägeeinrichtung (12) zum Wiegen des in die Einkaufsartikelaufnahmeeinrichtung (2) eingebrachten Artikels (8) aufweist.

3. Einkaufskorb (1) nach Anspruch 2, **wobei** die Wägeeinrichtung (12) dem Handgriff (3) und/oder einem Bodenbereich (13) der Einkaufsartikelaufnahmeeinrichtung (2) zugeordnet ist, wobei sich eine in dem Bodenbereich (13) ausgebildete Wägeeinrichtung (12) insbesondere zusätzlich entlang eines Seitenwandbereichs (14) der Einkaufsartikelaufnahmeeinrichtung (2) erstreckt.

4. Einkaufskorb (1) nach Anspruch 2 oder 3, **wobei** die Wägeeinrichtung (12) einem Verbindungsbereich (15) zwischen dem Handgriff (3) und der Einkaufsartikelaufnahmeeinrichtung (2) so zugeordnet ist, dass eine gesamte an dem Handgriff (3) angreifende Gewichtskraft der Einkaufsartikelaufnahmeeinrichtung (2) inklusive darin eingebrachter Artikel (8) detektierbar ist.

5. Einkaufskorb (1) nach einem der vorhergehenden Ansprüche, **wobei** der Einkaufskorb (1) einen in die Einkaufsartikelaufnahmeeinrichtung (2) formkorrespondierend einsetzbaren Innenkorb (16) aufweist.

6. Einkaufskorb (1) nach Anspruch 5, **wobei** die Einkaufsartikelaufnahmeeinrichtung (2) eine in einem Bodenbereich (13) der Einkaufsartikelaufnahmeeinrichtung (2) angeordnete Wägeeinrichtung (12) aufweist, und wobei der Innenkorb (16) in einem in die Einkaufsartikelaufnahmeeinrichtung (2) eingesetzten Zustand auf der Wägeeinrichtung (12) aufliegt.

7. Einkaufskorb (1) nach einem der vorhergehenden Ansprüche, **wobei** der Einkaufskorb (1) einen der Einkaufsartikelaufnahmeeinrichtung (2) zugeordneten Neigungssensor (17) aufweist, welcher eingerichtet ist, eine Neigung der Einkaufsartikelaufnahmeeinrichtung (2) zu detektieren.

8. Einkaufskorb (1) nach Anspruch 7, **wobei** der Einkaufskorb (1) eine Recheneinrichtung (18) aufweist, welche eingerichtet ist, eine von dem Neigungssensor (17) detektierte Neigung der Einkaufsartikelaufnahmeeinrichtung (2) bei der Ermittlung eines Gewichts eines in die Einkaufsartikelaufnahmeeinrichtung (2) eingebrachten Artikels (8) oder eines Gewichts der Einkaufsartikelaufnahmeeinrichtung (2) mit einem oder mehreren eingebrachten Artikeln (8) zu berücksichtigen.

9. Einkaufskorb (1) nach einem der vorhergehenden Ansprüche, **wobei** der Einkaufskorb (1) eine Speichereinrichtung (19) zum Speichern des von dem Erfassungsgerät (6) erfassten Artikelcodes (7) und/oder zum Speichern eines von einer Wägeeinrichtung (12) erfassten Gewichts eines Artikels (8) und/oder eines Gewichts der Einkaufsartikelaufnahmeeinrichtung (2) mit einem oder mehreren eingebrachten Artikeln (8) und/oder zum Speichern einer von einem Neigungssensor (17) erfassten Neigung der Einkaufsartikelaufnahmeeinrichtung (2) aufweist und/oder eine Selbstlokalisationseinrichtung aufweist und/oder eine Kommunikationseinrichtung (20) zum Übermitteln und/oder Bereitstellen des von dem Erfassungsgerät (6) erfassten Artikelcodes (7) und/oder des von der Wägeeinrichtung (12) erfassten Gewichts und/oder der von dem Neigungssensor (17) erfassten Neigung an ein externes Gerät (9) aufweist.

10. Einkaufskorb (1) nach einem der vorhergehenden Ansprüche, **wobei** der Einkaufskorb (1) eine optische Ausgabeeinrichtung (21), insbesondere ein Display und/oder Leuchtelemente, aufweist und/oder eine akustische Ausgabeeinrichtung (22) aufweist.

11. Einkaufskorb (1) nach einem der vorhergehenden Ansprüche, **wobei** der Einkaufskorb (1) eine Eingabeeinrichtung (23) zum Empfang von Eingaben eines Nutzers aufweist, insbesondere eine Eingabeeinrichtung (23) zur Betätigung des Erfassungsgeräts (6).

12. Einkaufskorb (1) nach einem der Ansprüche 10 und 11, **wobei** die Ausgabeeinrichtung (21, 22) und/oder die Eingabeeinrichtung (23) in und/oder an dem Öffnungsrand (5) der Einkaufsartikelaufnahmeeinrichtung (2) und/oder dem Handgriff (3) angeordnet ist.

13. Einkaufskorb (1) nach einem der Ansprüche 3 bis 12, **wobei** die Wägeeinrichtung (12) redundante Wägeeinrichtungen (12), insbesondere mindestens zwei Teilwägeeinrichtungen (24, 25), aufweist, wobei eine erste Teilwägeeinrichtung (24) dem Handgriff (3) zugeordnet ist und eine zweite Teilwägeeinrichtung (25) dem Bodenbereich (13) zugeordnet ist, und wobei der Einkaufskorb (1) eine Recheneinrichtung (18) aufweist, welche eingerichtet ist, ein von der ersten Teilwägeeinrichtung (24) detektiertes Signal mit einem von der zweiten Teilwägeeinrichtung (25) detektierten Signal zu vergleichen.

## Geänderte Patentansprüche

### Geänderte Patentansprüche gemäss Regel 137(2) EPÜ.

1. Einkaufskorb (1) mit einer Einkaufsartikelaufnahmeeinrichtung (2) und einem Handgriff (3), wobei der Handgriff (3) oberhalb einer Öffnungsebene (4) einer von einem Öffnungsrand (5) umgebenen Öffnung der Einkaufsartikelaufnahmeeinrichtung (2) angeordnet ist, wobei dem Öffnungsrand (5) der Einkaufsartikelaufnahmeeinrichtung (2) und/oder dem Handgriff (3) ein Erfassungsgerät (6) zum Erfassen eines Artikelcodes (7) eines in die Einkaufsartikelaufnahmeeinrichtung (2) eingebrachten oder einzubringenden Artikels (8) zugeordnet ist, wobei das Erfassungsgerät (6) eine Einrichtung zum Bereitstellen und/oder Senden und/oder Speichern des Artikelcodes (7) aufweist, wobei das Erfassungsgerät (6) nicht ohne Werkzeug lösbar mit dem Öffnungsrand (5) der Einkaufsartikelaufnahmeeinrichtung (2) und/oder dem Handgriff (3) verbunden ist, wobei in dem an dem Handgriff (3) getragenen Zustand des Einkaufskorbs (1) ein Erfassungsbereich (10) des Erfassungsgeräts (6) relativ zu der Öffnung der Einkaufsartikelaufnahmeeinrichtung (2) konstant so bemessen und ausgerichtet ist, dass dieser die Öffnung und einen zwischen dem Handgriff (3) und der Öffnung aufgespannten Volumenbereich (11) erfasst. **dadurch gekennzeichnet, dass** der Einkaufskorb (1) eine Eingabeeinrichtung (23) zur Betätigung des Erfassungsgeräts (6) aufweist, welche in und/oder an dem Handgriff (3) angeordnet ist.

2. Einkaufskorb (1) nach Anspruch 1, **wobei** die Einkaufsartikelaufnahmeeinrichtung (2) eine Wägeeinrichtung (12) zum Wiegen des in die Einkaufsartikelaufnahmeeinrichtung (2) eingebrachten Artikels (8) aufweist.

3. Einkaufskorb (1) nach Anspruch 2, **wobei** die Wägeeinrichtung (12) dem Handgriff (3) und/oder einem Bodenbereich (13) der Einkaufsartikelaufnahmeeinrichtung (2) zugeordnet ist, wobei sich eine in dem Bodenbereich (13) ausgebildete Wägeeinrichtung (12) insbesondere zusätzlich entlang eines Seitenwandbereichs (14) der Einkaufsartikelaufnahmeeinrichtung (2) erstreckt.

4. Einkaufskorb (1) nach Anspruch 2 oder 3, **wobei** die Wägeeinrichtung (12) einem Verbindungsbereich (15) zwischen dem Handgriff (3) und der Einkaufsartikelaufnahmeeinrichtung (2) so zugeordnet ist, dass eine gesamte an dem Handgriff (3) angreifende Gewichtskraft der Einkaufsartikelaufnahmeeinrichtung (2) inklusive darin eingebrachter Artikel (8) detektierbar ist.

5. Einkaufskorb (1) nach einem der vorhergehenden Ansprüche, **wobei** der Einkaufskorb (1) einen in die Einkaufsartikelaufnahmeeinrichtung (2) formkorrespondierend einsetzbaren Innenkorb (16) aufweist.

6. Einkaufskorb (1) nach Anspruch 5, **wobei** die Einkaufsartikelaufnahmeeinrichtung (2) eine in einem Bodenbereich (13) der Einkaufsartikelaufnahmeeinrichtung (2) angeordnete Wägeeinrichtung (12) aufweist, und wobei der Innenkorb (16) in einem in die Einkaufsartikelaufnahmeeinrichtung (2) eingesetzten Zustand auf der Wägeeinrichtung (12) aufliegt.

7. Einkaufskorb (1) nach einem der vorhergehenden Ansprüche, **wobei** der Einkaufskorb (1) einen der Einkaufsartikelaufnahmeeinrichtung (2) zugeordneten Neigungssensor (17) aufweist, welcher eingerichtet ist, eine Neigung der Einkaufsartikelaufnahmeeinrichtung (2) zu detektieren.

8. Einkaufskorb (1) nach Anspruch 7, **wobei** der Einkaufskorb (1) eine Recheneinrichtung (18) aufweist, welche eingerichtet ist, eine von dem Neigungssensor (17) detektierte Neigung der Einkaufsartikelaufnahmeeinrichtung (2) bei der Ermittlung eines Gewichts eines in die Einkaufsartikelaufnahmeeinrichtung (2) eingebrachten Artikels (8) oder eines Gewichts der Einkaufsartikelaufnahmeeinrichtung (2) mit einem oder mehreren eingebrachten Artikeln (8) zu berücksichtigen.

9. Einkaufskorb (1) nach einem der vorhergehenden Ansprüche, **wobei** der Einkaufskorb (1) eine Speichereinrichtung (19) zum Speichern des von dem Erfassungsgerät (6) erfassten Artikelcodes (7) und/oder zum Speichern eines von einer Wägeeinrichtung (12) erfassten Gewichts eines Artikels (8) und/oder eines Gewichts der Einkaufsartikelaufnahmeeinrichtung (2) mit einem oder mehreren eingebrachten Artikeln (8) und/oder zum Speichern einer von einem Neigungssensor (17) erfassten Neigung der Einkaufsartikelaufnahmeeinrichtung (2) aufweist und/oder eine Selbstlokalisationseinrichtung aufweist und/oder eine Kommunikationseinrichtung (20) zum Übermitteln und/oder Bereitstellen des von dem Erfassungsgerät (6) erfassten Artikelcodes (7) und/oder des von der Wägeeinrichtung (12) erfassten Gewichts und/oder der von dem Neigungssensor (17) erfassten Neigung an ein externes Gerät (9) aufweist.

10. Einkaufskorb (1) nach einem der vorhergehenden Ansprüche, **wobei** der Einkaufskorb (1) eine optische Ausgabeeinrichtung (21), insbesondere ein Display und/oder Leuchtelemente, aufweist und/oder eine akustische Ausgabeeinrichtung (22) aufweist.

11. Einkaufskorb (1) nach einem der vorhergehenden Ansprüche, **wobei** die Eingabeeinrichtung (23) zum Empfang von Eingaben eines Nutzers ausgebildet ist.

12. Einkaufskorb (1) nach einem der Ansprüche 10 und 11, **wobei** die Ausgabeeinrichtung (21, 22) in und/oder an dem Öffnungsrand (5) der Einkaufsartikelaufnahmeeinrichtung (2) und/oder dem Handgriff (3) angeordnet ist.

13. Einkaufskorb (1) nach einem der Ansprüche 3 bis 12, **wobei** die Wägeeinrichtung (12) redundante Wägeeinrichtungen (12), insbesondere mindestens zwei Teilwägeeinrichtungen (24, 25), aufweist, wobei eine erste Teilwägeeinrichtung (24) dem Handgriff (3) zugeordnet ist und eine zweite Teilwägeeinrichtung (25) dem Bodenbereich (13) zugeordnet ist, und wobei der Einkaufskorb (1) eine Recheneinrichtung (18) aufweist, welche eingerichtet ist, ein von der ersten Teilwägeeinrichtung (24) detektiertes Signal mit einem von der zweiten Teilwägeeinrichtung (25) detektierten Signal zu vergleichen.
